# EUROPEAN PATENT APPLICATION

(11) **EP 4 393 310 A1**
(43) Date of publication of application: **03.07.2024**
(21) Application number: 23220155.8
(22) Date of filing: 22.12.2023
(51) Int. Cl.: A23C 9/12, A47J 43/046, G16Y 40/35

(54) **A YOGURT MAKER PROVIDING INTERNET CONNECTION**

(30) Priority: 29.12.2022 TR 202221446
(71) Applicant: Arçelik Anonim Sirketi, 34445 Istanbul (TR)
(72) Inventor: KESKIN, EGE, 34445 ISTANBUL (TR); ORENGUL, HAKAN, 34445 ISTANBUL (TR); DOYRAN, ANIL, 34445 ISTANBUL (TR); ARIS, SIMAL, 34445 ISTANBUL (TR); ALTIPARMAK, SAFA, 34445 ISTANBUL (TR)

(57) **Abstract**

The present invention relates to a yogurt maker (1) comprising a body (2); at least one receptacle (3) which is disposed in the body (2) and wherein the fermentation process is performed; a lid (4) which is provided on the body (2) so as to prevent the contact of the receptacle (3) with the external environment; at least one heater (5) and a cooler (6) which are provided on the body (2); a control unit (7) which enables the heater (5) and the cooler (6) to be operated in a certain order; a measuring member (8) which is disposed on the receptacle (3); a network card (9) which is provided on the control unit (7) and which provides wireless connection; a mobile device (M) which provides remote access to the control unit (7); and a server (S) which controls data exchange between the mobile device (M) and the network card (9).

## Description

The present invention relates to a yogurt maker which provides internet connection.

Today, yogurt is a foodstuff which is often consumed in almost every household. Yogurt is often produced by boiling and fermenting milk at home. Since the boiling process and fermentation temperature of the milk are important for the quality of yogurt, the process must be carried out under constant observation. This situation causes a waste of time for consumers and makes the process difficult. Therefore, automatic yogurt makers are frequently used today. Since yogurt is consumed daily, especially in families with small children, the yogurt makers become very useful. The yogurt makers provide the user with functions such as heating, cooling, keeping warm, time setting, automatic termination, etc. Moreover, the use of sensors which determine the taste and consistency of yogurt is necessary to end the automatic fermentation process and to make yogurt as per user preference. However, in homes which need a plurality of batches of yogurt of different consistency and taste, it is not possible to make more than one batch of yogurt at the same time and to control the consistency and taste of all the batches of yogurt. When the user moves away from the yogurt maker, the consistency and taste of the yogurt differ and it is not possible to control it remotely.

In the state of the art Japanese Patent No. JPH0951759, a yogurt maker is disclosed, which performs heating and cooling.

The aim of the present invention is the realization of a yogurt maker which can be controlled remotely and which ensures that more than one batch of yogurt with different taste can be prepared as needed at the same time.

The yogurt maker realized in order to attain the aim of the present invention, explicated in the first claim and the respective claims thereof, comprises a body; a receptacle which is placed into the body; a lid which is used for covering the receptacle; at least one heater and a cooler which are provided on the body; and a control unit which controls the operation of the heater and the cooler. By operating the heater and the cooler in a certain order, the fermentation process is performed. The performance of the fermentation process is controlled by the control unit.

The yogurt maker is enabled to establish a wireless connection by means of a network card provided on the control unit and a modem which provides internet connection by connecting the network card. Thus, the yogurt maker can be accessed via a mobile device. Wireless data exchange is provided by means of a server which provides data exchange between the mobile device and the network card.

The yogurt maker of the present invention comprises a control method which allows the fermentation processes to be controlled by controlling the program parameters via the mobile device. By means of said control method, the program parameters can be selected and the process can be controlled via the mobile device. Thus, the user can control the process when not near the yogurt maker.

In an embodiment of the present invention, the yogurt maker comprises the control method which provides the selection of algorithms and fermentation programs predefined by the manufacturer via the mobile device. Thus, the choices made by the user on the mobile device are transmitted to the control unit via the server and the fermentation process is performed.

In an embodiment of the present invention, the yogurt maker comprises a plurality of cooking containers which are placed on the receptacle, and the control method which ensures that the cooking containers are identified separately via the mobile device and fermented with different parameters. Thus, yogurt with different taste and consistency can be obtained in different cooking containers at the same time.

In an embodiment of the present invention, the yogurt maker comprises the control method which enables that the notifications for steps such as heating, cooling and fermentation are transmitted to the user via the mobile device. Thus, the user can be informed step by step about the fermentation process even when not near the yogurt maker.

In an embodiment of the present invention, the yogurt maker comprises the control method which enables the user to choose among the activities via the mobile device and a server having a memory unit which allows the storage of previously performed fermentation activities. Thus, the user can easily select the fermentation program the user last selected or the frequently used programs without changing the settings again.

In an embodiment of the present invention, the yogurt maker comprises the control method which ensures that preference records for a plurality of users are recorded on the memory unit, which can be controlled via the mobile device. Thus, people can choose and run fermentation programs with their own preferences without accidentally using the programs of other people living in the same house.

In an embodiment of the present invention, the yogurt maker comprises the control unit which ensures that the user is informed about the quality of the fermentation process by evaluating the information received from the measuring member by the control unit and transmitting the same to the mobile device via the server. Thus, the user can monitor the quality of the yogurt and receive the necessary warnings via the mobile device.

By means of the present invention, a yogurt maker is realized, which can be personalized and which provides wireless network connection and ease of use.

A yogurt maker realized in order to attain the aim of the present invention is illustrated in the attached figures, where:

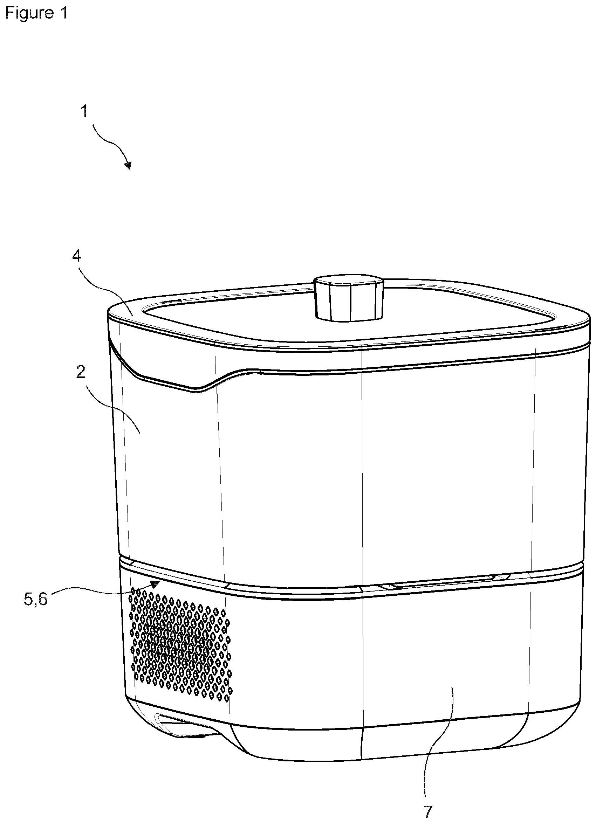

Figure 1 - is the perspective view of the yogurt maker.

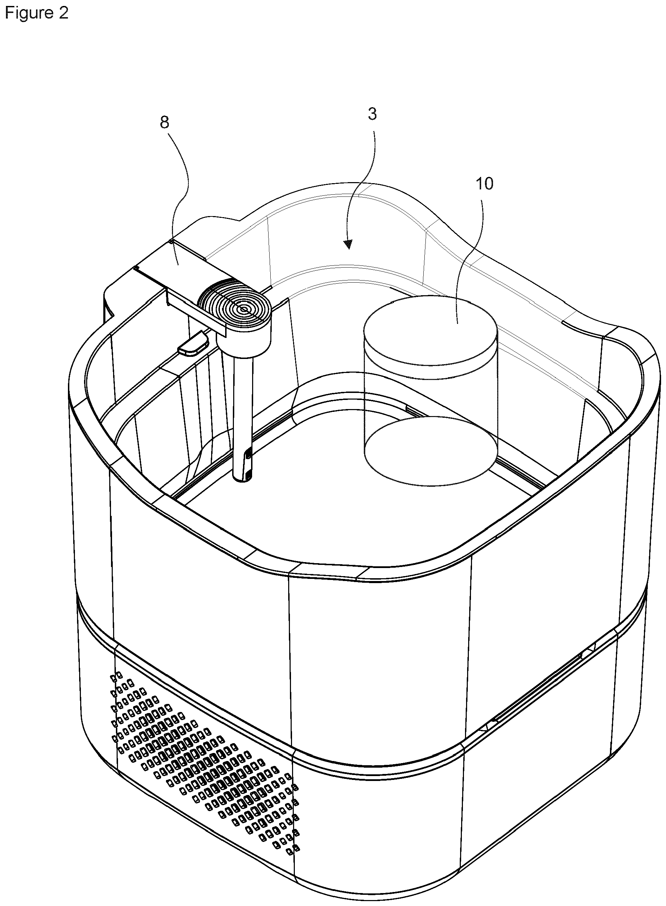

Figure 2 - is the perspective view of the receptacle and the measurement member.

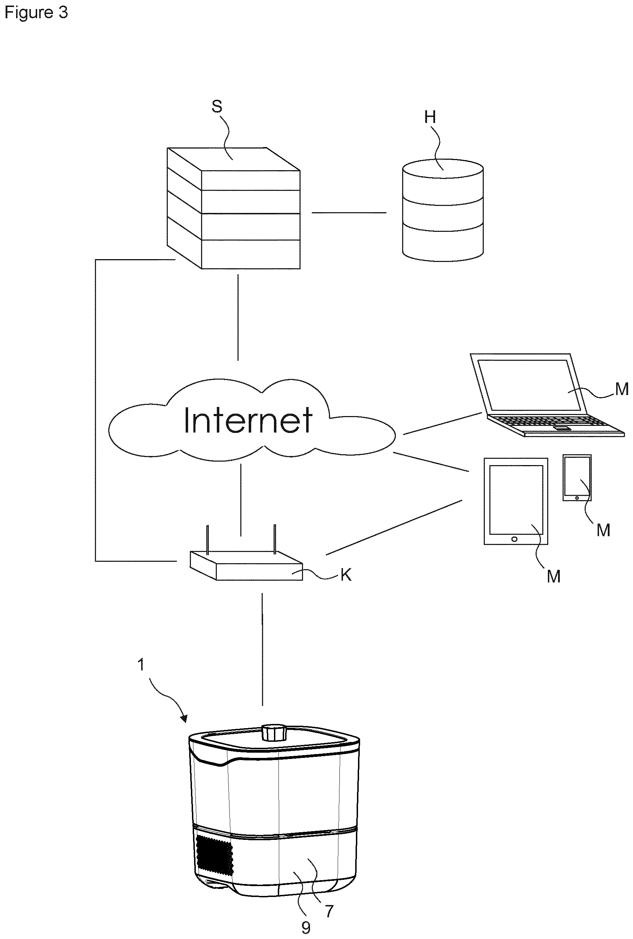

Figure 3 - is the schematic view of the control system.

The elements illustrated in the figures are numbered as follows.
1- Yogurt maker
2- Body
3- Receptacle
4- Lid
5- Heater
6- Cooler
7- Control unit
8- Measurement member
9- Network card
10- Cooking container

The yogurt maker (1) comprises a body (2); at least one receptacle (3) which is disposed in the body (2) and wherein the fermentation process is performed; a lid (4) which is provided on the body (2) so as to prevent the contact of the receptacle (3) with the external environment; at least one heater (5) and a cooler (6) which are provided on the body (2); a control unit (7) which enables the heater (5) and the cooler (6) to be operated in a certain order; a measuring member (8) which is disposed on the receptacle (3); a network card (9) which is provided on the control unit (7) and which provides wireless connection; a modem (K) which provides internet connection by connecting the network card (9); a mobile device (M) which provides remote access to the control unit (7); and a server (S) which controls data exchange between the mobile device (M) and the network card (9). By operating the heater (5) and the cooler (6) in a certain order, the fermentation process is performed. The performance of the fermentation process is controlled by the control unit (7). By means of the network card (9) provided on the control unit (7), the yogurt maker (1) is enabled to establish wireless connection. Thus, the yogurt maker (1) can be accessed via the mobile device (M). Wireless data exchange is provided by means of the server (S) which provides data exchange between the mobile device (M) and the network card (9).

The yogurt maker (1) of the present invention comprises a control method which allows the fermentation processes to be controlled by controlling the program parameters via the mobile device (M). By enabling the yogurt maker (1) to connect to the mobile device (M), program parameters can be selected and operated remotely. Thus, the user can control the yogurt maker (1) even when not near the same.

In an embodiment of the present invention, the yogurt maker (1) comprises the control method which ensures that the fermentation process is performed by the control unit (7) as a result of the fermentation algorithms predefined by the manufacturer being selected by the user via the mobile device (M). The fermentation programs and parameters are predefined on the mobile device (M). Different options are provided here depending on the preferred yogurt taste and consistency. The user can select and run the algorithm desired via the mobile device (M).

In an embodiment of the present invention, the yogurt maker (1) comprises a plurality of cooking containers (10) which are placed on the receptacle (3), and the control method which ensures that the cooking containers (10) are identified separately via the mobile device (M) and fermented with different parameters. More than one cooking container (10) can be used during the fermentation process. Said cooking containers (10) can be defined via the mobile device (M). A yogurt preparation algorithm with different taste and consistency can be operated specifically for the defined cooking containers (10). Thus, more than one variety of yogurt can be obtained at the same time by using different time and measurement values.

In an embodiment of the present invention, the yogurt maker (1) comprises the control method which enables that the notifications for steps such as heating, cooling and fermentation are transmitted to the user via the mobile device (M). The user is warned with a notification via the mobile device (M) while the heating process is in progress, the cooling process is in progress, the fermentation process is in progress or when the fermentation process is completed. Thus, the user can remove the containers (10), wherein the fermentation process is completed faster and which are ready, from the body (2), and the fermentation process for the others continues until the preferred taste and consistency are achieved.

In an embodiment of the present invention, the yogurt maker (1) comprises the control method which enables the user to choose among the activities via the mobile device (M) and the server (S) having a memory unit (H) which allows the storage of previously performed fermentation activities. Fermentation activities which are previously and/or frequently used by the user are recorded on the memory unit (H) and displayed to the user on the mobile device (M). Thus, it is ensured that the user is not required to change the settings for the desired program each time.

In an embodiment of the present invention, the yogurt maker (1) comprises the control method which ensures that a plurality of personal preference records are recorded on the memory unit (H), which can be controlled via the mobile device (M). The parameters stored in the memory unit (H) can be personalized with different profiles. Thus, when the yogurt maker (1) is used by more than one person, separate program parameters for each person are stored in the memory unit (H) and can be operated easily.

By means of the present invention, a yogurt maker (1) is realized, which can be personalized by being controlled via the mobile device (M) by establishing wireless connection. By means of said yogurt maker (1), it becomes possible to prepare more than one variety of yogurt at the same time, providing ease of use to the users.

## Claims

1. A yogurt maker (1) **comprising** a body (2); at least one receptacle (3) which is disposed in the body (2) and wherein the fermentation process is performed; a lid (4) which is provided on the body (2) so as to prevent the contact of the receptacle (3) with the external environment; at least one heater (5) and a cooler (6) which are provided on the body (2); a control unit (7) which enables the heater (5) and the cooler (6) to be operated in a certain order; a measuring member (8) which is disposed on the receptacle (3); a network card (9) which is provided on the control unit (7) and which provides wireless connection; a modem (K) which provides internet connection by connecting the network card (9); a mobile device (M) which provides remote access to the control unit (7); and a server (S) which controls data exchange between the mobile device (M) and the network card (9), **characterized by** a control method which allows the fermentation processes to be controlled by controlling the program parameters via the mobile device (M).

2. A yogurt maker (1) as in Claim 1, **characterized by** the control method which ensures that the fermentation process is performed by the control unit (7) as a result of the fermentation algorithms predefined by the manufacturer being selected by the user via the mobile device (M).

3. A yogurt maker (1) as in Claim 1 or 2, **characterized by** a plurality of cooking containers (10) which are placed on the receptacle (3), and the control method which ensures that the cooking containers (10) are identified separately via the mobile device (M) and fermented with different parameters.

4. A yogurt maker (1) as in any one of the above claims, **characterized by** the control method which enables that the notifications for steps such as heating, cooling and fermentation are transmitted to the user via the mobile device (M).

5. A yogurt maker (1) as in any one of the above claims, **characterized by** the control method which enables the user to choose among the activities via the mobile device (M) and the server (S) having a memory unit (H) which allows the storage of previously performed fermentation activities.

6. A yogurt maker (1) as in Claim 5, **characterized by** the control method which ensures that a plurality of personal preference records are recorded on the memory unit (H), which can be controlled via the mobile device (M).

7. A yogurt maker (1) as in any one of the above claims, **characterized by** the control method which ensures that the user is informed about the quality of the fermentation process by evaluating the information received from the measuring member (8) by the control unit (7) and transmitting the same to the mobile device (M) via the server (S).
